# FASCICULE DE BREVET EUROPEEN

(11) **EP 0 494 550 B1**
(45) Date de publication et mention de la délivrance du brevet: **15.06.1994**
(21) Numéro de dépôt: 91402552.3
(22) Date de dépôt: 25.09.1991
(51) Int. Cl.: B65D 30/06, B65D 75/50

(54) **Utilisation d'un conteneur pour matériaux solides granulaires, notamment en catalyse et en adsorption**
Verwendung eines mit pulverförmigen Material gefüllten Behälters, insbesondere als Katalysator oder Absorptionsmittel
Use for a container of solid granular material, in particular for catalyst or for absorbtion

(30) Priorité: 11.01.1991 FR 9100306
(43) Date de publication de la demande: 15.07.1992
(73) Titulaire: Benzaria, Jacques Raphäel, 60230 Chambly (FR)
(72) Inventeur: Benzaria, Jacques Raphäel, 60230 Chambly (FR)
(74) Mandataire: Andreeff, François

(56) Documents cités:
- FR-A- 1 356 099
- GB-A- 442 180
- GB-A- 1 249 050
- US-A- 3 925 959

## Description

L'invention est relative à l'utilisation, dans le domaine de la mise en contact de fluides avec des matériaux solides, de conteneurs pour matériaux granulaires, perméables aux fluides et dont la forme générale est sensiblement un tétraèdre. Ces conteneurs ont un rapport surface/volume particulièrement bien adapté pour la mise en oeuvre de la matière granulaire, en particulier pour la catalyse, l'adsorption, l'échange d'ions, la distillation.

Le Document FR-A-1 356 099 définit une utilisation selon le préambule de la revendication 1.

L'utilisation de ces conteneurs concerne notamment l'adsorption, la distillation, l'échange d'ions, la distillation et la catalyse simultanées.

Dans bien des applications industrielles, on a recours à des matériaux en grains: c'est le cas par exemple d'échange d'ions, d'adsorption sur charbons actifs, tamis moléculaires ou silice activée, ou pour des réactions catalytiques, ou des liquides ou des gaz devant être en contact avec ces matériaux.

Ces matériaux présentent, en lit fixe, une résistance importante au passage des fluides, entraînant des pertes de charge importantes, des formations de chemins préférentiels ainsi qu'un classement plus ou moins régulier par ordre de taille des particules. Il peut se produire des formations de poches de gaz entraînant des effets piston qui conduisent aux bouchages.

Les matériaux granulaires en lit expansé ou fluidisé s'usent considérablement et se cassent, perdant ainsi leur efficacité et donnant naissance à des fines, particulièrement colmatantes, causant des perturbations considérables.

Enfin, pour certaines applications, on a besoin d'une surface de contact élevée pour un volume donné de matériaux granulaires ou encore d'espace libre autour d'amas de grains.

Aussi, on a proposé de réaliser certaines opérations de mise en contact de matériaux solides en grains avec des liquides ou des gaz en enfermant lesdits matériaux dans des conteneurs ou des sacs perméables aux fluides mais dont les points de passage des fluides (pores ou espaces, interstices ou mailles, s'il s'agit de grilles ou de matériaux textiles tissés ou tricotés) sont suffisamment petits pour retenir les particules les plus fines des matériaux solides.

Les réalisations, jusqu'à ce jour, de sacs ou conteneurs se sont montrées insatisfaisantes, soit qu'elles se déforment quand on les empile, soit qu'elles présentent un rapport surface/volume insuffisant, soit encore qu'elles soient difficiles ou coûteuse à fabriquer.

Le premier objet de l'invention est l'utilisation de conteneurs doués de bonnes propriétés mécaniques.

Un autre objet de l'invention est l'utilisation de conteneurs présentant un rapport surface/volume maximum compte-tenu de leur forme géométrique.

Un autre objet est d'utiliser des conteneurs n'ayant qu'une faible perte de charge par rapport à la masse granulaire.

Un autre objet est d'utiliser des conteneurs dont le contenu peut être différent, d'un conteneur à l'autre, sans engendrer de mélanges de produits granulaires.

Toutes ces utilisations de conteneurs concernent les réalisations de masses de contact pour la catalyse, l'échange d'ions, l'adsorption, la distillation et la catalyse simultanées, pour lesquelles ces conteneurs sont particulièrement bien adaptés.

D'autres objets apparaissent à la lumière de ce qui suit:

L'invention concerne l'utilisation selon la revendication 1.

De préférence, au moins deux des arêtes opposées présentent une rigidité supérieure à celle des autres arêtes; ces deux arêtes opposées sont de préférence celles qui ont constitué la fermeture du cylindre qui a engendré le tétraèdre.

Elles peuvent comporter une plaque, un renfort ou une tige de renforcement ou plus simplement résulter de la soudure ou du collage des bases communes des triangles adjacents. On peut également si l'un des triangles est plus haut que l'autre, replier la partie excédentaire sur la base du premier.

On peut également renforcer un plus grand nombre d'arêtes ou même leur totalité, mais ce n'est pas indispensable, lorsque les efforts mécaniques demeurent modérés.

Par matériau perméable ou poreux, on entend tout matériau solide laissant passer les gaz et/ou les liquides mais dont les ouvertures ont une taille suffisamment petite pour retenir
les grains du matériau solide granulaire qu'ils doivent contenir. Si la plus petite dimension des grains du matériau solide est égale à (n), les dimensions des points de passages pour les fluides devront, par exemple, être égales ou inférieures à 0,9n, de préférence égales ou inférieures à 0,5n. Sous cette réserve, il n'y a aucune limite à la taille des grains et des pores (pore désignant tout point de passage pour un fluide, quelque soit sa taille). On pourra ainsi réaliser des conteneurs pour des matériaux en grains allant par exemple de 0,1 à 20 mm, ces valeurs n'étant pas limitatives.

Les figures jointes illustrent une réalisation du conteneur dont l'utilisation, dans le domaine de la mise en contact de fluides avec des matériaux solides, est l'objet de l'invention.

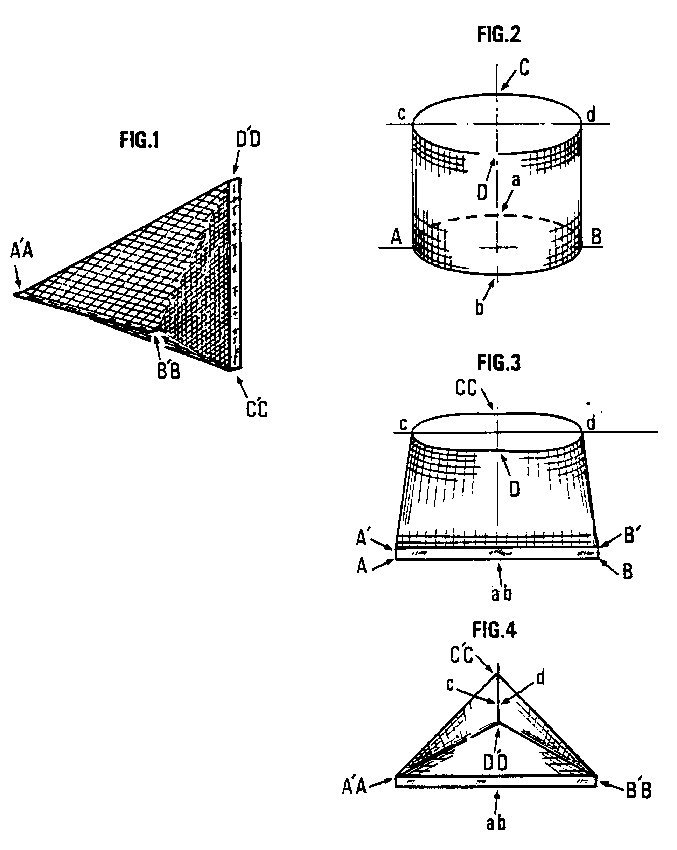

La figure 1 illustre en perspective un conteneur de forme tétraédrique ABCD dont les 4 faces sont réalisées en matériau poreux, par exemple un tissu métallique. On remarque entre A et B et entre C et D l'existence d'un bourrelet AA′B′B résultant de la soudure des 2 bases communes des triangles ABC et ABD d'une part et ACD et BCD d'autre part.

Les figures 2, 3, 4 illustrent en perspective latérale les étapes de fabrication et de remplissage du conteneur de la figure 1. On part d'une portion d'un tube en matière poreuse ou perméable déformable, par exemple en tissu métallique. La section droite de ce tube peut être circulaire, ovale ou avoir toute autre forme; le tube sera donc qualifié ci-après de "cylindrique ou équivalent". Dans cette définition on inclut aussi le cas où la portion du tube ne serait pas exactement cylindrique ou équivalente, c'est-à-dire que l'arête du cylindre n'aurait pas la même longueur en tous points. Ceci pourrait être réalisé par exemple en tranchant obliquement et non perpendiculairement un tube de plus grande longueur lorsqu'on veut former la portion de tube nécessaire à la fabrication du conteneur.

Les bases supérieure et inférieure sont initialement ouvertes (figure 2). On rapproche les deux demi-circonférences (a) et (b) définies par leurs extrémités communes A et B jusqu'à les mettre en contact et on fixe ensemble, par exemple par soudage, ces deux demi-circonférences, qui forment alors un bourrelet sensiblement linéaire ABB′A′ (figure 3).

On introduit une matière granulaire dans le sac dont le fond a été fermé comme expliqué plus haut, puis on répète l'opération de rapprochement et fixation, cette fois avec les demi-circonférences (c) et (d) définies par leurs extrémités communes C et D, donc dans une direction sensiblement orthogonale par rapport à celle du premier rapprochement (ab). Après fixation, par exemple par soudages des demi-circonférences, on a formé un bourrelet sensiblement linéaire CC′D′D (figure 4).

Au cours du rapprochement des demi-circonférences, leurs extrémités s'éloignent l'une de l'autre: A de B et C de D. La longueur de chaque bourrelet est évidemment sensiblement égale à la longueur de chaque demi-circonférence qui lui a donné naissance.

Comme matériau on peut utiliser, par exemple, un matériau tissé ou non-tissé, la matière étant par exemple d'origine naturelle telle que minérale, végétale, animale, ou d'origine synthétique. Comme matière on peut citer, à titre d'exemple non limitatif, le polypropylène, les polyesters, les polyamides, l'aluminium, le cuivre, le titane, le nickel, le platine, l'acier inoxydable ou un grillage ou treillis métallique, la largeur de maille étant suffisamment petite pour retenir les matériaux solides particulaires. On évitera les matériaux trop souples qui donneraient une structure tétraédrique douée d'une résistance insuffisante à l'écrasement. On préfère une certaine rigidité pour que la structure conserve sa forme mais les matériaux excessivement raides et cassants seront évités, sinon la formation du tétraèdre serait difficile ou impossible.

Le matériau devra être physiquement et chimiquement inerte vis-à-vis du fluide au traitement duquel il est destiné.

De préférence la structure terminée aura une hauteur, calculée entre une base et le sommet opposé, égale à 0,5 à 2 fois, de préférence 0,8 à 1 fois, la longueur moyenne des arêtes.

Comme matériau granulaire à introduire dans les conteneurs, avant leur fermeture, pour réaliser des masses de contact, on peut utiliser un agent solide d'adsorption, par exemple un tamis moléculaire, de la silice, de l'alumine ou du charbon actif, un agent catalytique solide, par exemple un catalyseur d'hydrogénation, une résine sulfonique, un catalyseur d'adoucissement des essences, une résine d'échangeuse d'ions, par exemple une zéolite, au moins un enzyme fixé sur un support solide.

On préfère évidemment les matériaux granulaires qui ne sont pas sensiblement dissous ou détériorés par les fluides avec lesquels ils seront mis en contact. Les fluides qui peuvent être contactés avec les matériaux granulaires peuvent être des liquides et/ou des gaz. Si plusieurs phases fluides sont présentes, elles peuvent circuler à co-courant ou à contre-courant.

En cas d'emploi comme catalyseur, on disposera de préférence d'un nombre suffisant de conteneurs tétraédriques dans l'appareil de réaction, en les empilant si nécessaire.

Lors de l'utilisation une certaine déformation des conteneurs peut se produire mais on préfère l'éviter en utilisant des tissus possédant une bonne résistance mécanique et/ou en
renforçant une partie ou la totalité des arêtes. En cas d'écrasement excessif on perdrait en effet les avantages de la structure tétraédrique, à savoir présenter une surface externe de contact supérieure, à volume égal, à celle des principaux autres solides.

Pour certaines utilisations l'empilement sera fait au hasard, pour d'autres utilisations on rangera les conteneurs de manière à ce qu'ils s'occupent le moins d'espace possible. Maintenir des espaces vides est particulièrement utile dans certains cas, par exemple pour certaines réactions gaz-liquide.

On notera à titre d'exemples quelques applications de l'invention:
- adoucissement des essences, le catalyseur étant par exemple une phtalocyanine sur charbon,
- hydrogénation des dioléfines ou des acétyléniques avec, par exemple, du nickel ou du palladium sur alumine,
- adoucissement des eaux calcaires avec des zéolites, des résines échangeuses d'ions,
- réactions catalysées par des acides, le conteneur renfermant par exemple une résine sulfonique,
- réactions sur des fluides ou réactifs en cours de distillation, d'adsorption ou d'échange ionique,
- réactions continues de saponification d'ester dans une colonne à double enveloppe,
- réactions continues de fabrication d'éthers et d'esters, et notamment du méthyl tertiobutyl ether (MTBE) et du tertioamyl méthyl éther (TAME),
- réactions continues de cracking d'éthers.

Ces réactions ne constituent que des exemples non limitatifs de l'utilisation, dans le domaine de la mise en contact de fluides avec des matériaux solides, de ces conteneurs chargés en divers catalyseurs.

## Revendications

1. Utilisation d'un conteneur pour matériaux solides comprenant une enveloppe fermée, perméable aux gaz et/ou liquides et dont les pores sont suffisamment petits pour retenir des matériaux solides, caractérisée en ce que le conteneur comporte quatre faces sensiblement triangulaires constituant sensiblement un tétraèdre, et en ce qu'elle est réalisée dans le domaine de la mise en contact de fluides avec des matériaux solides, granulaires, après remplissage dudit conteneur par l'un desdits matériaux, solides granulaires.

2. Utilisation d'un conteneur selon la revendication 1, pour laquelle deux arêtes opposées du conteneur présentent des moyens de renforcement mécanique.

3. Utilisation d'un conteneur selon la revendication 2, pour laquelle les moyens de renforcement résultent de la fixation entre elles des parties inférieures de deux triangles adjacents ayant une arête commune.

4. Utilisation d'un conteneur selon l'une des revendications 1 à 3, pour laquelle l'enveloppe du conteneur est constituée d'un grillage ou treillis métallique.

5. Utilisation d'un conteneur selon l'une des revendications 1 à 3, pour laquelle l'enveloppe du conteneur est constituée à partir d'un matériau tissé ou non tissé, choisi dans le groupe formé par les matériaux d'origine synthétique et les matériaux d'origine naturelle.

6. Utilisation d'un conteneur selon l'une des revendications 1 à 5, pour laquelle le solide de remplissage dudit conteneur est un catalyseur en grains, ledit conteneur constituant une masse de contact catalytique.

7. Utilisation d'un conteneur selon l'une des revendications 1 à 5, pour laquelle le solide de remplissage dudit conteneur est une résine sulfonique en grains.

8. Utilisation d'un conteneur selon l'une des revendications 1 à 5, pour laquelle le solide de remplissage dudit conteneur est un agent d'adsorption.

9. Utilisation d'un conteneur selon l'une des revendications 1 à 5, pour laquelle le solide de remplissage dudit conteneur est un échangeur d'ions.

10. Utilisation d'un conteneur selon l'une des revendications 1 à 5 pour laquelle le solide de remplissage dudit conteneur est au moins un enzyme fixé sur un support solide en grains.

11. Utilisation d'un conteneur selon l'une quelconque des revendications 1 à 10, pour laquelle l'enveloppe du conteneur est en tissu métallique.

12. Utilisation d'un conteneur selon l'une quelconque des revendications 1 à 10, pour laquelle l'enveloppe du catalyseur est en métal déployé.

13. Utilisation d'un conteneur selon l'une quelconque des revendications 1 à 10, pour laquelle l'enveloppe du catalyseur est en métal perforé.

14. Utilisation d'un conteneur selon l'une quelconque des revendications précédentes caractérisé en ce que ledit conteneur est fabriqué selon le procédé suivant :
(a) on rapproche jusqu'au contact et fixe l'une à l'autre deux demi-circonférences d'une première extrémité d'une portion cylindrique ou équivalente d'un tube en matière perméable aux gaz et/ou aux liquides et dont les pores ont une taille suffisamment petite pour retenir des matériaux granulaires, de manière à fermer cette première extrémité,
(b) on introduit de la matière granulaire dans le conteneur dont l'extrémité fermée constitue la base, et
(c) on rapproche jusqu'au contact et fixe l'une à l'autre deux demi-circonférences de la seconde extrémité de la portion cylindrique ou équivalente du tube, ledit rapprochement étant effectué dans une direction sensiblement orthogonale par rapport à celle du rapprochement de l'étape (a), de manière à fermer cette seconde extrémité.

15. Utilisation d'un conteneur selon la revendication 14 dans lequel les extrémités de la portion du tube ou une partie d'entre elles sont découpées de manière à former des languettes repliables.

## Patentansprüche

1. Verwendung eines Behälters für feste Materialien, der eine geschlossene, gas- und/oder flüssigkeitsdurchlässige Umhüllung umfaßt, deren Poren ausreichend klein sind, um die festen Materialien zurückzuhalten, dadurch gekennzeichnet, daß der Behälter vier, im wesentlichen dreieckige Flächen umfaßt, die im wesentlichen einen Tetraeder bilden, und daß sie auf dem Gebiet der Inkontaktbringung von Fluiden mit festen körnigen Materialien nach der Füllung des Behälters durch das eine der festen körnigen Materialien verwirklicht wird.

2. Verwendung eines Behälters nach Anspruch 1, bei welcher zwei gegenüberliegende Kanten des Behälters mechanische Versteifungsmittel darstellen.

3. Verwendung eines Behälters nach Anspruch 2, bei welcher die Versteifungsmittel aus der gegenseitigen Befestigung unterer Teile von zwei angrenzenden Dreiecken, die eine gemeinsame Kante aufweisen, resultieren.

4. Verwendung eines Behälters nach einem der Ansprüche 1 bis 3, bei welcher die Umhüllung des Behälters aus einem metallischen Gitterwerk oder Netzwerk gebildet ist.

5. Verwendung eines Behälters nach einem der Ansprüche 1 bis 3, bei welcher die Umhüllung des Behälters auf der Grundlage eines gewebten oder nichtgewebten Materials, das aus der durch die Materialien synthetischen Ursprungs oder die Materialien natürlichen Ursprungs gebildeten Gruppe ausgewählt ist, gebildet ist.

6. Verwendung eines Behälters nach einem der Ansprüche 1 bis 5, bei welcher der Füllungsfeststoff des Behälters ein körniger Katalysator ist, wobei der Behälter eine katalytische Kontaktmasse bildet.

7. Verwendung eines Behälters nach einem der Ansprüche 1 bis 5, bei welcher der Füllungsfeststoff des Behälters ein körniges Sulfonharz ist.

8. Verwendung eines Behälters nach einem der Ansprüche 1 bis 5, bei welcher der Füllungsfeststoff des Behälters ein Adsorptionsmittel ist.

9. Verwendung eines Behälters nach einem der Ansprüche 1 bis 5, bei welcher der Füllungsfeststoff des Behälters ein Ionenaustauscher ist.

10. Verwendung eines Behälters nach einem der Ansprüche 1 bis 5, bei welcher der Füllungsfeststoff des Behälters wenigstens ein auf einem festen körnigen Träger gebundenes Enzym ist.

11. Verwendung eines Behälters nach einem der Ansprüche 1 bis 10, bei welcher die Umhüllung des Behälters aus metallischen Gewebe besteht.

12. Verwendung eines Behälters nach einem der Ansprüche 1 bis 10, bei welcher die Umhüllung des Behälters aus ausgebreitetem Metall besteht.

13. Verwendung eines Behälters nach einem der Ansprüche 1 bis 10, bei welcher die Umhüllung des Behälters aus perforiertem Metall besteht.

14. Verwendung eines Behälters nach einem der vorhergehenden Ansprüche, dadurch gekennzeichnet, daß der Behälter nach dem folgenden Verfahren hergestellt wird:
(a) man nähert bis zum Kontakt einander an und befestigt miteinander zwei Halbkreisumfänge eines ersten Endes von einem zylindrischen Bereich oder äquivalent von einem Tubus aus gas- und/oder flüssigkeitsdurchlässigem Material, wobei dessen Poren eine ausreichend kleine Abmessung aufweisen, um körnige Materialien zurückzuhalten, derart, dieses erste Ende zu verschließen,
(b) man führt das körnige Material in den Behälter, dessen verschlossenes Ende die Basis bildet, ein und
(c) man nähert bis zum Kontakt einander an und befestigt miteinander zwei Halbkreisumfänge des zweiten Endes von dem zylindrischen Bereich oder äquivalent von dem Tubus, wobei die Annäherung in einer in Bezug auf diejenige Annäherung des Schrittes (a) im wesentlichen orthogonalen Richtung durchgeführt wird, derart, dieses zweite Ende zu verschließen.

15. Verwendung eines Behälters nach Anspruch 14, bei welcher die Enden des Bereichs des Tubus oder ein Teil zwischen ihnen geschnitten bzw. gestanzt werden, derart, klappbare Laschen zu bilden.

## Claims

1. Use of a container for solid materials and comprising a closed casing permeable to gases and/or liquids and the pores of which are sufficiently small to retain solid materials, characterised in that the container comprises four substantially triangular faces which substantially constitute a tetrahedron, and in that it is carried out in the field of establishing contact between fluids and granular solid materials, once the container has been filled with one of the said granular solid materials.

2. Use of a container according to claim 1 in which two opposite edges of the container comprise mechanical reinforcing means.

3. Use of a container according to claim 2 in which the reinforcing means result from the fixing inter se of the bottom parts of two adjacent triangles having one common edge.

4. Use of a container according to one of claims 1 to 3 for which the casing of the container consists of a metal grille or lattice.

5. Use of a container according to one of claims 1 to 3 in which the casing of the container is made from a woven or non-woven material chosen from the group comprising the materials of synthetic origin and the materials of natural origin.

6. Use of a container according to one of claims 1 to 5 in which the solid material for filling the container is a catalyst in the form of grains, the said container constituting a catalytic contact mass.

7. Use of a container according to one of claims 1 to 5 in which the solid material for filling the container is a sulphonic resin in the form of grains.

8. Use of a container according to one of claims 1 to 5 in which the solid material for filling the said container is an adsorption agent.

9. Use of a container according to one of claims 1 to 5 in which the solid material for filling the said container is an ion exchanger.

10. Use of a container according to one of claims 1 to 5 in which the solid material for filling the said container is at least one enzyme fixed on a solid carrier in the form of grains.

11. Use of a container according to any one of claims 1 to 10 in which the casing of the container is of a woven metallic material.

12. Use of a container according to any one of claims 1 to 12 in which the casing of the catalyst is of expanded metal.

13. Use of a container according to any one of claims 1 to 13 in which the casing of the catalyst is of perforated metal.

14. Use of a container according to any one of the preceding claims characterised in that the said container is manufactured by the following process:
(a) two half circumferences of a first end of a cylindrical of equivalent portion of a tube of a material which is permeable to gases and/or liquids and of which the pores are of a sufficiently small size to retain granular materials are brought together until they are in contact and are fixed one to the other in such a way as to close this first end,
(b) granular material is introduced into the container of which the closed end constitutes the base, and
(c) two half circumferences of the second end of the cylindrical or equivalent portion of the tube are brought together until they are in contact and are fixed one to the otner, this bringing together being carried out in a direction which is substantially at right-angles to that of the bringing together in stage (a), in order to close this second end.

15. Use of a container according to claim 14 in which the ends of the portion of the tube or a part of them are so cut as to form tongues which can be folded back.
